Europäisches Patentamt

European Patent Office

Office européen des brevets

(19)

(11) Publication number: **0 671 431 A1**

## EUROPEAN PATENT APPLICATION

(12)

(21) Application number: **95103413.1**

(22) Date of filing: **09.03.95**

(51) Int. Cl.6: **C08J 5/18**, C08L 23/10, B32B 27/32, B32B 27/10

(30) Priority: **09.03.94 IT MI940427**

(43) Date of publication of application:
**13.09.95 Bulletin 95/37**

(84) Designated Contracting States:
**BE DE FR GB IT NL**

(71) Applicant: **Himont Incorporated**
**2801 Centerville Road**
**New Castle County**
**Delaware (US)**

(72) Inventor: **Wuensch, Horst**
**44, Markgrafenallee**
**D-95448 Bayreuth (DE)**

(74) Representative: **Zumstein, Fritz, Dr. et al**
**Dr. F. Zumstein**
**Dipl.-Ing. F. Klingseisen**
**Bräuhausstrasse 4**
**D-80331 München (DE)**

(54) **Films or sheets made of olefin polymers.**

(57) Disclosed are an olefin polymer film or sheet produced from an olefin polymer or an olefin polymer composition, having a melt flow rate from 2,000 to 500,000 mPa•s and a density from 1 to 500 g/m$^2$, a multilayer sheet comprising at least one layer of such film or sheet bonded with at least one layer made of paper or cardboard; and processes for preparing same. Also disclosed is a container manufactured with the above mentioned multilayer sheet.

EP 0 671 431 A1

The present invention relates to single or multilayer films and sheets, wherein at least one layer is made from an olefin polymer having a high melt flow rate, and to a process for the production of said films and sheets. Moreover, the present invention relates to multilayer sheets comprising at least one film or sheet layer made from such an olefin polymer having a high melt flow rate bonded to at least one layer of paper or cardboard, as well as to a process for the production of said multilayer sheets and to a container manufactured from said multilayer sheets.

Polyolefin films and sheets are already known in the art, but until now films have have not been produced by extrusion of the polyolefin material while in the molten state due to its extremely low melt flow rate. Presently such technique is used only with non-olefinic polymers, such as PVC, EVA and polyurethane.

Now it has surprisingly been found that it is now possible to apply said technique to polyolefins and polyolefin compositions by using polyolefins and polyolefin compositions having a melt flow rate ranging from 2,000 to 500,000 mPa•s thus producing new films and sheets having a density which varies from 1 to 500 g/m$^2$.

Therefore, the present invention provides a film or a sheet produced from an olefin material comprising an olefin polymer or an olefin polymer composition, wherein said polymer or polymer composition has a melt flow rate from 2,000 to 500,000 mPa•s, preferably from 2,000 to 350,000 mPa•s more preferably from 2,000 to 150,000 mPa•s, and the resulting film or sheet has a density from 1 to 500 g/m$^2$.

Moreover the present invention provides a process for preparing such a film or sheet from an olefin polymer or an olefin polymer composition comprising:

- melting an olefin polymer or an olefin polymer composition having a melt flow rate from 2,000 to 500,000 mPa•s to the molten state,
- passing the molten polymer through means suitable to impart a laminar form to the molten polymer, and
- cooling the molten polymer in laminar form thus obtained, thereby obtaining a solid film or sheet.

The olefin polymer material suitable for preparing the film or sheet of the present invention can be selected from the group consisting of:

A) a composition comprising (by weight):
1) from 30 to 65% of a propylene and $C_4$-$C_8$ α-olefin copolymer, containing from 80 to 98% of propylene; and
2) from 35 to 70% of a random copolymer of propylene and 2-10% of ethylene, or of a random copolymer of propylene, 0.5-5% of ethylene and 2-10% of a $C_4$-$C_{10}$ α-olefin;

B) a composition comprising (by weight):
1) from 30 to 60% of LLDPE, having a melt index, condition E (MIE) from 0.1 to 15 g/10 min; and
2) 40 to 70% of one or more crystalline copolymers of propylene and one or more comonomers selected from the group consisting of ethylene and $C_4$-$C_8$ α-olefin, wherein the amount of comonomer is from 5 to 20%;

C) a composition comprising (by weight):
1) from 20 to 60% of a random copolymer of propylene and a $C_4$-$C_{10}$ α-olefin, containing from 1 to 10% of $C_4$-$C_{10}$ α-olefin (Fraction I); and
2) from 40 to 80% of a random copolymer of propylene and a $C_4$-$C_{10}$ α-olefin, containing from 15 to 40% of $C_4$-$C_{10}$ α-olefin (Fraction II),

wherein the percent by weight of fraction II (%II), compared to the total composition (C), and the weight percent of $C_4$-$C_{10}$ α-olefin content in fraction II ($C_4^{II}$) comply with the following relation:

$$\% \text{ II} \bullet C_4^{II} \geqq 1200;$$

D) a terpolymer of propylene with minor quantities, in particular 1-20% by weight, of ethylene and 1-butene;

E) a composition comprising (by weight):
1) 10-50 parts of a propylene homopolymer with an isotactic index greater than 80, or a random copolymer of propylene and ethylene or a $C_4$-$C_8$ α-olefin or both ethylene and $C_{4-8}$ α-olefin containing more than 85% of propylene ;
2) 5-20 parts of a copolymer containing ethylene and propylene or a $C_4$-$C_8$ α-olefin or both propylene and $C_4$-$C_8$ α-olefin, insoluble in xylene at ambient temperature; preferably the amount of ethylene is more than 75%, more preferably more than 80%; and
3) 40-80 parts of a random copolymer of ethylene, and propylene or a $C_4$-$C_8$ α-olefin or both propylene and $C_4$-$C_8$ α-olefin, and optionally minor quantities, preferably 1-10% of a diene, containing

2

less than 40% of ethylene and being soluble in xylene at ambient temperature;

F) a composition comprising (by weight):

1) 10-60 parts of propylene homopolymer with an isotactic index greater than 90 or a crystalline random copolymer of propylene and ethylene or a $C_4$-$C_8$ $\alpha$-olefin or both ethylene and $C_4$-$C_8$ $\alpha$-olefin containing more than 85% of propylene and having an isotactic index greater than 85;

2) 10-40 parts of a crystalline copolymer containing ethylene and propylene, insoluble in xylene at ambient temperature, preferably the amount of ethylene is more than 75%, more preferably more than 80%;

3) 30-60 parts of an amorphous ethylene/propylene copolymer optionally containing minor portions preferably 1-10%, of a diene, soluble in xylene at ambient temperature and containing from 40 to 70% of ethylene;

G) a blend containing two or more of the above mentioned olefin polymer materials.

The films and sheets of the present invention possess excellent adhesive properties, therefore they are particularly suitable to be bonded to other materials (such as paper, cardboard, cloths and wood).

As a way of example, one can produce multilayer sheets comprising one layer of paper or cardboard bonded on one side to a layer of a film or sheet of the present invention. Or one can produce multilayer sheets comprising two layers of paper or cardboard with a layer of the film or sheet of the present invention interposed between them.

The films and sheets of the present invention offer an excellent barrier to water and humidity, therefore the above mentioned multilayer sheets are particularly suitable for use, for example, as boxes, envelopes and bags used for packaging products that must be kept dry or free from humidity. Thus such products produced with the films and sheets of this invention provide better protection for and longer preservation of the materials pachaged therewith.

Another embodiment of the present invention is a multilayer sheet comprising at least one layer of a film or sheet of the present invention, wherein said film or sheet is bonded to at least one layer of paper or cardboard.

Another embodiment of the present invention is represented by a container manufactured with the above mentioned multilayer sheet.

The present invention provides also a process for the preparation of a multilayer sheet comprising at least one layer of paper or cardboard and at least one layer of thermoplastic material, said process comprising bonding at least one layer of paper or cardboard with at least one layer of the film or sheet of the present invention.

Said bonding can be done at the same time that the thermoplastic polymer material is extruded into film, causing the thermoplastic film or sheet to adhere to the layer (or layers) of paper or cardboard while the thermoplastic polymer material is still in the molten or softened state.

As used herein "molten state" means a polymer or polymer composition heated to at least 5°C below the melting point (Tm) up to 150°C above the melting point of the particular polymer or polymer composision being used. Typically the polymer material is converted into film or sheet at 50 to 80°C above the melting point of the polymer material and have from more than one melting point, the temperature has to be above the highest melting point (Tm).

As an alternative the multilayer sheet can be produced by preparing the plastic film or sheet previously and then bonding it to the layer (or layers) of paper or cardboard by both heat and compression.

Unlike the adhesive products used up to now to produce multilayer sheets comprising one or more layers of paper or cardboard, the adhesive films and sheets of the present invention offer the considerable advantage that they can be entirely and easily separated from the nonplastic substrata material to which the films of the present invention are bonded, during the recycling processes. Thus it is possible to recycle the paper and cardboard that would otherwise not be recyclable due to the presence of a plastic film or sheet layer that cannot be removed.

Moreover, by using the films and sheets of the present invention for the production of multilayer sheets, the plastic film or sheet material can be recovered readily and easily since it does not solubilize in the solvents commonly used for separating the layers of bonded materials thereby by-passing the costly processes of extracting the plastic material from the solutions.

Another characteristic of the multilayer sheets of the present invention is the good resistance to delamination of the layers that can be caused by heat or humidity, for example.

The density of the films and sheets of the present invention ranges preferably from 1 to 100 $g/m^2$, more preferably from 1 to 50 $g/m^2$. The thickness of the films and sheets is proportional to its density and ranges from 1 to 700 $\mu$m, preferably from 2 to 100 $\mu$m. Moreover, the more fluid the polymer composition becomes, the thinner the film or sheet will be.

In point of fact the films of the present invention can be produced very thin: for example, compared to the films produced until now adopting the same technique but using nonolefin polymers, the thickness of the films of the present invention is up to 40% less than those produced by nonolefin polymers, typically the films thickness is from 10% to 40% less then nonolefin polymer films produced by the same process .

The polymers comprising the films or sheets of the present invention can be produced by polymerizing olefins with Ziegler-Natta catalysts. In particular, the polymer compositions described above can be prepared either by mechanically blending the polymers that make up said compositions, or by chemically blending by sequential polymerization carried out in two or more stages using highly stereospecific Ziegler-Natta catalysts.

Examples of compositions (A), (B), (C), (E) and (F) are described respectively in published European patent applications EP-A-483523, EP-A-556815, EP-A-560326, EP-A-472946 and EP-A-400333 in the name of the Applicant.

The $C_4$-$C_8$ $\alpha$-olefin monomers that can be used to prepare the polymer compositions suitable for the preparation of the films or sheets of the present invention comprise both linear and branched $\alpha$-olefins, and are preferably selected from the group consisting of 1-butene, 1-pentene, 1-hexene, 1-octene and 4-methyl-1-pentene. Particularly preferred is 1-butene.

The melt index values indicated for the LLDPE present in composition (B) are determined according to ASTM-D-1238, condition E (MIE).

The ethylene and 1-butene are present in terpolymer (D) preferably in quantities ranging from 1 to 5% by weight and from 1 to 10% by weight respectively.

Examples of monomers of dienes that can be used for the preparation of the copolymers of the above mentioned compositions (E) and (F) are 1,4-butadiene, 1,4-hexadiene, 2-methyl-1,4-pentadiene, 1,5-cyclooctadiene, 1,4-cycloheptadiene, norbornadiene and ethylidene-norbornene.

The diene, which is optionally present in fraction (3) of compositions (E) and (F), is preferably in quantities ranging from 0.5 to 10% by weight with respect to the total weight of fractions (2) and (3).

The value of the melt flow rate of the polymers and polymer compositions within the limits defined by the present invention are obtained either directly in polymerization, or subsequent to polymerization by visbreaking, a process of controlled free radical degradation of the polymer during the extrusion process, for example. Said visbreaking process is carried out by using the proper quantities of organic peroxides as degrading agent, as is well known in the art. The olefin polymers and olefin polymer compositions fed to the extruder can be in the form of pellets or spheroidal particles as obtained directly in polymerization.

Various types of fillers and additives such as stabilizers and pigments, commonly used for olefin polymers, can be added to the polymers used to produce the films and sheets of the present invention.

The process for preparing the films and sheets of the present invention utilizes the polymer mass in the molten state. Said process is advantageous also because the olefin polymers and olefin polymer compositions used, in addition to having a high melt flow rate, generally also have not too high melting points, said melting points being lower than the operating temperature of the apparatus used to produce the films and sheets of the present invention; generally speaking said temperature is lower than about 230°C.

An example of the process and of the means suitable for imparting a laminar form that can be used to produce the film or sheet of the present invention can be schematized as follows: the molten polymer material is placed in a container having a straight slit in the lower part of one of the vertical walls. Said slit can vary in both width and length, as a way of example, the width can range from 10 to 500 $\mu$m and the length can reach 2 meters or more. The film or sheet is formed by the gravitational exit of the fluid polymer mass from said slit, optionally into a cooled atmosphere, and conveying the resulting product to one or more cylindrical drawing rollers.

As an alternative, for example, one can use an apparatus with two rotating cylindrical rollers. By way of a funnel, for example, the fluid polymer mass is poured in the space between said rollers, where the width of said space is adjustable. Once it proceeds past the above rollers, the product is conveyed to one or more cylindrical drawing rollers.

By using the two processes described above, properly modified as explained below, one can also produce the multilayer sheet of the present invention. This is done by causing one or more layers of the material, such as paper or cardboard, that one desires to bond to the film or sheet of the present invention, to run over the above mentioned cylindrical drawing rollers at the same time as the polymer product.

Examples of apparatuses suitable for such processes are those of the Duplex BemaTec type, marketed by BemaTec SA or the Caratsch type, marketed by Caratsch AG.

The polymer or polymer composition films of the present invention have been tested to evaluate their characteristics and properties; the methods used to carry out said tests are described below.

Melt flow rate: The viscosity is determined by a rotational viscosimeter apparatus called Rotovisko, marketed by Haake and operating according to method ISO 2555.

Melting point (m.p.or Tm): DSC (Differential Scanning Calorimetry).

Tensile Strength: ASTM D 882.

Moisture Permeability test: ASTM E 96.

The following examples are given in order to illustrate and not limit the present invention.

Example 1

A polyolefin film (a) is prepared with a polymer composition (m.p. 132°C) consisting of: (I) 50% by weight of a propylene/ethylene random copolymer containing 4% by weight of ethylene; and (II) 50% by weight of a propylene/1-butene random copolymer containing 16% by weight of 1-butene. Said copolymer is obtained by sequential copolymerization in the presence of highly stereospecific Ziegler-Natta catalysts supported on active magnesium chloride.

Said polymer composition, to which are added the proper conventional additives (stabilizers etc.), is extruded with a Xantrix 3024 concentrate of 2,5-dimethyl-2,5-di(t-butylperoxy)hexane (marketed by Himont) in an amount from 1 to 1.5% by weight with respect to the composition, in order to obtain a composition with a melt flow rate of about 10,000 mPa•s. The temperature of the extruder screw ranges from 190 to 220°C.

The molten polymer mass is pushed through the funnel container of the Duplex Coater apparatus (Gear Die) wherein the polymer material is converted into film. The velocity at which said apparatus operates in order to produce the film (a) is 200-300 m/min.

Example 2

A polyolefin film (b) is prepared as in Example 1, where the only difference is in the polyolefin composition (m.p. 141°C) used to prepare said polyolefin film (b). The polymer composition consists of: (I) 30% by weight of an ethylene/propylene copolymer containing 1.6% by weight of ethylene; (II) 5% by weight of an ethylene/propylene copolymer insoluble in xylene at ambient temperature, containing 0.8% of propylene; and (III) 65% by weight of a propylene/ethylene copolymer soluble in xylene at ambient temperature, containing 26% by weight of ethylene.

Example 3

A polyolefin film (c) is prepared as in Example 2, where the only difference is that said polyolefin film (c) contains the following additives (in addition to the ones present in Example 2) (m.p. of the composition 141°C): erucamide (1,000 ppm), oleamide (1,000 ppm) and Syloblok 45 (1500 ppm).

Example 4

A multilayer film (A) is prepared by bonding film (a) to a layer of cardboard. Example 1 is repeated, the only difference being that, while film (a) is being drawn, also a layer of cardboard runs over the rollers of the Bematec SA Duplex Coater apparatus.

Example 5

A multilayer film (B) is prepared by bonding film (b) to a layer of paper. Example 2 is repeated, the only difference being that, while film (b) is being drawn, also a layer of paper runs over the rollers of the Bematec SA Duplex Coater apparatus.

Example 6

A multilayer film (C) is prepared by bonding film (c) to a layer of paper. Example 3 is repeated, the only difference being that while film (c) is being drawn, also a layer of paper runs over the rollers of the Bematec SA Duplex Coater apparatus.

The multilayer films (A), (B) and (C), are subjected to a moisture permeability test carried out at 38°C for 24 hours, with a relative humidity of 90%. The results of the test on multilayer films (A), (B), and (C), show that 10.7, 9.3 and 11.1 $g_{water}/m^2_{sample}$ permeate through respectively.

The tensile strength values for films (a), (b) and (c), their thickness and their density are reported in Table 1.

| Film | (a) | (b) | (c) |
|---|---|---|---|
| Thickness ($\mu$m) | 35 | 35 | 35 |
| Density (g/m$^2$) | 25 | 25 | 25 |
| Tensile strength (MPa) | 18.8 MD[1] | 12.3 MD[1] | 6.6 MD[1] |
| | 14.4 TD[2] | 8.2 TD[2] | 4.3 TD[2] |

[1] machine direction;
[2] transverse direction

## Claims

1. A film or sheet comprising an olefin polymer material, wherein said polymer material has a melt flow rate ranging from 2,000 to 500,000 mPa•s, and said film or sheet has a density ranging from 1 to 500 g/m$^2$.

2. The film or sheet of claim 1, wherein the polymer material comprises (by weight):
   1) from 30 to 65% of a propylene and $C_4$-$C_8$ $\alpha$-olefin copolymer, containing from 80 to 98% of propylene; and
   2) from 35 to 70% of a random copolymer of propylene and 2-10% of ethylene, or of a random copolymer of propylene, 0.5-5% of ethylene and 2-10% of a $C_4$-$C_{10}$ $\alpha$-olefin.

3. The film or sheet of claim 1, wherein the polymer material comprises (by weight):
   1) from 30 to 60% of LLDPE, having a melt index, condition E (MIE) from 0.1 to 15 g/10 min; and
   2) 40 to 70% of one or more crystalline copolymers of propylene and one or more comonomers selected from the group consisting of ethylene and $C_4$-$C_8$ $\alpha$-olefin, wherein the amount of comonomer is from 5 to 20%.

4. The film or sheet of claim 1, wherein the polymer material comprises (by weight):
   1) from 20 to 60% of a random copolymer of propylene and a $C_4$-$C_{10}$ $\alpha$-olefin, containing from 1 to 10% of $C_4$-$C_{10}$ $\alpha$-olefin (Fraction I); and
   2) from 40 to 80% of a random copolymer of propylene and a $C_4$-$C_{10}$ $\alpha$-olefin, containing from 15 to 40% of $C_4$-$C_{10}$ $\alpha$-olefin (Fraction II),
   wherein the percent by weight of fraction II (%II), compared to the total composition (C), and the weight percent of $C_4$-$C_{10}$ $\alpha$-olefin content in fraction II ($C_4^{II}$) comply with the following relation:

$$\% \; II \bullet C_4^{II} \geqq 1200.$$

5. The film or sheet of claim 1, wherein the olefin polymer is a terpolymer of propylene with minor quantities of ethylene and 1-butene.

6. The film or sheet of claim 1, wherein the polymer material comprises (by weight):
   1) 10-50 parts of a propylene homopolymer with an isotactic index greater than 80, or a random copolymer of propylene and ethylene or a $C_4$-$C_8$ $\alpha$-olefin or both ethylene and $C_{4-8}$ $\alpha$-olefin containing more than 85% of propylene ;
   2) 5-20 parts of a copolymer containing ethylene and propylene or a $C_4$-$C_8$ $\alpha$-olefin or both propylene and $C_4$-$C_8$ $\alpha$-olefin, insoluble in xylene at ambient temperature; and
   3) 40-80 parts of a random copolymer of ethylene, and propylene or a $C_4$-$C_8$ $\alpha$-olefin or both propylene and $C_4$-$C_8$ $\alpha$-olefin, and optionally minor quantities preferably 1-10% of a diene, containing less than 40% of ethylene and being soluble in xylene at ambient temperature.

7. The film or sheet of claim 1, wherein the polymer material comprises (by weight):

1) 10-60 parts of propylene homopolymer with an isotactic index greater than 90 or a crystalline random copolymer of propylene and ethylene or a $C_4$-$C_8$ $\alpha$-olefin or both ethylene and $C_4$-$C_8$ $\alpha$-olefin containing more than 85% of propylene and having an isotactic index greater than 85;

2) 10-40 parts of a crystalline copolymer containing ethylene and propylene, insoluble in xylene at ambient temperature;

3) 30-60 parts of an amorphous ethylene/propylene copolymer optionally containing minor portions of a diene, soluble in xylene at ambient temperature and containing from 40 to 70% of ethylene.

8. A process for the preparation of a film or a sheet containing an olefin polymer material comprising:
- subjecting to melting an olefin polymer material having a melt flow rate ranging from 2,000 to 500,000 mPa•s to provide a molten polymer
- causing the molten polymer thus obtained to pass through means suitable to impart a laminar form to the melted mass, and
- subjecting to cooling the molten mass in laminar form thus obtained, thereby obtaining a solid film or sheet.

9. A multilayer sheet comprising at least one layer made up of a film or a sheet comprising an olefin polymer or an olefin polymer composition, said polymer or polymer composition having a melt flow rate from 2,000 to 500,000 mPa•s, and said film or sheet having a density from 1 to 500 g/m$^2$ and being bonded with at least one layer of paper or cardboard.

10. The multilayer sheet of claim 9, wherein one layer of the film or sheet comprising the olefin polymer or the olefin polymer composition is interposed between two layers of paper or cardboard.

11. A process for the preparation of a multilayer sheet comprising at least one layer consisting of paper or cardboard and at least one layer consisting of plastic material, said process comprising bonding at least one layer of paper or cardboard to at least one layer consisting of a film or a sheet comprising an olefin polymer or an olefin polymer composition, wherein the polymer or polymer composition has a melt flow rate ranging from 2,000 to 500,000 mPa•s and the film or sheet has a density from 1 to 500 g/m$^2$.

12. A container manufactured from the multilayer sheet of claim 10.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 483 675 (HIMONT INC) 6 May 1992 <br> * page 16, line 1 - line 3; claim 1 * <br> --- | 1,2 | C08J5/18 <br> C08L23/10 <br> B32B27/32 <br> B32B27/10 |
| D,A | EP-A-0 556 815 (HIMONT INC) 25 August 1993 <br> * page 2, line 1 - line 2; claim 1 * <br> * page 7, line 7 - line 8 * <br> --- | 1,3 | |
| D,A | EP-A-0 560 326 (HIMONT INC) 15 September 1993 <br> * page 2, line 3 - line 5; claim 1 * <br> --- | 1,4 | |
| A | EP-A-0 145 014 (SUMITOMO CHEMICAL CO) 19 June 1985 <br> * table 1, ex. 3 * <br> * claims 1,5 * <br> * ex. 3, comp. ex. 2,5 * <br> --- | 1,5 | |
| A | EP-A-0 477 662 (HIMONT INC) 1 April 1992 <br> * page 14, line 1 - line 3; claim 1 * <br> --- | 1,6 | |
| A | EP-A-0 444 671 (HIMONT INC) 4 September 1991 <br> * claims 1,4,7 * <br> --- | 1,7 | TECHNICAL FIELDS SEARCHED (Int.Cl.6) |
| A | US-A-3 784 085 (KILGORE) 8 January 1974 <br> * column 2, line 55 - line 58; figures 2,5 * <br> * column 4, line 1 - line 9 * <br> ----- | 9-12 | C08J <br> B32B <br> C08L |

The present search report has been drawn up for all claims

| Place of search | Date of completion of the search | Examiner |
|---|---|---|
| THE HAGUE | 15 May 1995 | Pamies Olle, S |

EPO FORM 1503 03.82 (P04C01)